Europäisches Patentamt

European Patent Office

Office européen des brevets

(19)

(11) Veröffentlichungsnummer: **0 071 004**
**B1**

(12) # EUROPÄISCHE PATENTSCHRIFT

(45) Veröffentlichungstag der Patentschrift:
13.11.85

(21) Anmeldenummer: **82105001.0**

(22) Anmeldetag: **08.06.82**

(51) Int. Cl.⁴: **A 21 B 1/26**, A 21 B 3/04

(54) Backofen.

(30) Priorität: **30.07.81 DE 3130064**

(43) Veröffentlichungstag der Anmeldung:
**09.02.83 Patentblatt 83/6**

(45) Bekanntmachung des Hinweises auf die Patenterteilung:
**13.11.85 Patentblatt 85/46**

(84) Benannte Vertragsstaaten:
**AT CH FR GB IT LI NL SE**

(56) Entgegenhaltungen:
**DE - A - 2 315 435**
**DE - B - 2 829 937**
**FR - A - 1 095 623**
**US - A - 1 637 618**

(73) Patentinhaber: **Werner & Pfleiderer,**
**Theodorstrasse 10 Postfach 30 12 20,**
**D-7000 Stuttgart 30 (DE)**

(72) Erfinder: **Hoefert, Hans, Ing.(grad.), Talstrasse 12,**
**D-7067 Urbach (DE)**
Erfinder: **Knelle, Ulrich, Dipl.-Ing., Brenzstrasse 30,**
**D-7140 Ludwigsburg (DE)**
Erfinder: **Schröder, Helmut, Ing.(grad.), Fellbacher**
**Strasse 6, D-7140 Ludwigsburg (DE)**

## Beschreibung

Die Erfindung bezieht sich auf einen Backofen nach dem Oberbegriff des Patentanspruches 1.

Ein Backofen mit den wesentlichen Merkmalen der vorstehend erwähnten Gattung ist beispielsweise bekannt aus der DE-B-2 829 937. Bei derartigen, auch als Backschrank bezeichneten Backöfen sind die Umsteuerklappen durch ein Gestänge so miteinander gekuppelt, daß abwechselnd der eine Verteilerkanal mit der Druckseite und der andere Verteilerkanal mit der Saugseite des Umwälzventilators in Verbindung gebracht wird. Die Betätigung der Umsteuerklappen erfolgt durch einen auf das Gestänge einwirkenden Stellmotor.

Bei Backöfen oder Backschränken, die wie im vorliegenden Fall mit umgewälzter Heißluft direkt beheizt werden, ist es heute allgemein üblich, die zu Beginn des Backvorganges vorgesehene und bis zu drei Minuten dauernde Beschwadung bei ruhender Atmosphäre durchzuführen. Zu diesem Zweck wird der Antrieb des Umwälzventilators und notwendigerweise auch die die Heißluft erzeugende Heizquelle, welche im allgemeinen ein von einem Gas- oder Ölbrenner beheizter Wärmetauscher ist, abgeschaltet.

Damit soll verhindert werden, daß der Schwaden durch den Wärmetauscher geführt und dabei überhitzt wird, wodurch er seine Eigenschaft, auf der Oberfläche des Backgutes zu kondensieren, weitgehend einbüßt.

Bei der Ausübung des vorstehend skizzierten Verfahrens hat sich gezeigt, daß vom Abschalten des Antriebs bis zum Stillstand des Umwälzventilators eine erhebliche Zeitspanne verstreicht. In der Praxis wurden Nachlaufzeiten bis zu vier Minuten festgestellt. Wegen der notwendigen Wartezeit bis zum Stillstand des Ventilators ist daher ein Backen »Schuß auf Schuß« nicht möglich. Man hat zwar versucht, diesem Nachteil durch die Verwendung eines sogenannten Bremsmotors als Antrieb für den Umwälzventilator abzuhelfen, mußte dafür aber höhere Anschaffungs- und Betriebskosten in Kauf nehmen.

Aber auch bei stillstehendem Umwälzventilator ist nicht auszuschließen, daß ein Teil des Schwadens in den Bereich des Wärmetauschers gelangt und überhitzt wird, weil die Backkammer, in welche der Schwaden eingeführt wird, über die Verteilerkanäle mit der Heizquelle in Verbindung steht.

Ein weiterer Nachteil des Beschwadens bei ruhender Atmosphäre ist darin gelegen, daß nach dem Abschalten des Umwälzventilators und des Brenners der Wärmetauscher während der Schwadeneinwirkungszeit abkühlt. Eine in vielen Fällen notwendige Wärmezufuhr zum Backgut unmittelbar nach Beendigung des Beschwadens ist dann aber nicht möglich, was zu mangelhafter Qualität des Backgutes führt.

Der Erfindung liegt die Aufgabe zugrunde, einen Backofen gemäß dem Oberbegriff des Patentanspruches 1 mit einfachen Mitteln so zu verbessern, daß ohne nachteilige Auswirkungen auf die Qualität des Backgutes ein Backvorgang unmittelbar dem anderen folgen kann.

Diese Aufgabe wird erfindungsgemäß durch die im Kennzeichnungsteil des Patentanspruches 1 angegebenen Merkmale gelöst.

Die Umsteuerklappen erfüllen nach der Erfindung zwei Funktionen: Während des Backens dienen sie wie üblich zum periodischen Wechsel der Strömungsrichtung der durch die Backkammer umgewälzten Heizluft. Beim Beschwaden hingegen schließen sie den Backraum vollständig gegen die Heizquelle und den Umwälzventilator ab. Dies bringt den Vorteil, daß während des Beschwadens der Ventilator und die Heizquelle weiter in Betrieb bleiben können, obwohl das Beschwaden in ruhender Atmosphäre stattfindet. Der Wärmetauscher kühlt also nicht ab; er wird sogar auf eine etwas höhere Temperatur als die übliche Betriebstemperatur gebracht, so daß sofort nach Beendigung des Beschwadens eine große Wärmemenge für das Backen zur Verfügung steht. Natürlich entfallen auch die sonst aus Sicherheitsgründen notwendigen Spülzeiten vor der erneuten Inbetriebnahme des Brenners. Die erfindungsgemäßen Maßnahmen gewährleisten deshalb eine hohe Qualität des Backgutes und bringen eine Backzeitverkürzung, die bis zu drei Minuten betragen kann. Bei einer für die gattungsgemäßen Backöfen üblichen Backzeit von ca. 20 Minuten bedeutet dies eine Zeitersparnis von ca. 15%.

Durch das Abschließen der Verteilerkanäle während des Beschwadens können auch keine Schwaden in den Raum des Backofens, welcher die Heizquelle und den Umwälzventilator aufnimmt und üblicherweise den oberen Teil des Backofens darstellt, gelangen. Weil jetzt nur noch der untere Teil des Backofens, nämlich die Backkammer und die seitlich anschließenden Verteilerkanäle mit Schwaden gefüllt werden müssen, wird eine erhebliche Menge Schwaden und damit natürlich auch Energie eingespart. Die Verkleinerung des vom Schwaden auszufüllenden Volumens dürfte im Vergleich mit bekannten Backöfen bei ca. 30% liegen.

Durch das Merkmal des Patentanspruches 2 wird die steuerungstechnisch problemlose Möglichkeit geschaffen, lediglich durch eine Schalterbetätigung die eine oder andere Funktion der Umsteuerklappen einzustellen.

Ein Ausführungsbeispiel der Erfindung ist anhand der Zeichnung beschrieben. Es zeigt

Fig. 1 einen senkrechten Schnitt durch den oberen Teil eines Backofens in schematischer Darstellung,

Fig. 2 einen waagrechten Schnitt nach der Linie II-II in Fig. 1,

Fig. 3 eine Darstellung wie Fig. 1, jedoch in anderer Betriebsstellung und

Fig. 4 nochmals dieselbe Darstellung wie Fig. 1, aber in einer noch anderen Betriebsstellung.

Der Backofen weist in bekannter Weise eine im Grundriß rechteckige Backkammer 1 auf, welche vorzugsweise einen bis zum Boden des Backofens reichenden Raum darstellt, in den das Backgut mittels eines während des Backens darin verbleibenden fahrbaren Hordengestells eingebracht wird. Es können aber auch mehrere etagenförmig übereinander angeordnete Backkammern vorgesehen sein, welche in bekannter Weise, z. B. mittels Abziehapparaten mit Backgut beschickt werden.

Oberhalb der Backkammer 1 befindet sich eine aus einer Heizquelle 2 und einem Umwälzventilator 3 bestehende Vorrichtung zum Erzeugen und Umwälzen von Heißluft. Die Heizquelle kann — wie allgemein üblich — ein von einem Gas- oder Ölbrenner beheizter Wärmetauscher sein. Sie kann aber auch aus einem direkt im Umwälzstrom angeordneten Gasbrenner bestehen, wenn dessen Abgase ernährungsphysiologisch unbedenklich sind. Von der erwähnten Vorrichtung erstrecken sich zwei Verteilerkanäle 4 und 5 nach unten, welche zu den mit Durchtrittsöffnungen für die Heißluft versehenen, einander gegenüberliegenden Seitenwänden 6 und 7 der Backkammer 1 führen.

An den offenen Enden der Verteilerkanäle 4, 5 — im Beispielsfall also an deren oberen Enden — sind Umsteuerklappen 8 und 9 um horizontale Achsen 10 und 11 schwenkbar angeordnet. Die Umsteuerklappen 8, 9 sind als Segmentklappen gestaltet und können in drei um jeweils 90 Grad versetzte Stellungen geschwenkt werden. Als Antrieb ist für jede Umsteuerklappe 8, 9 ein separater Stellmotor 12 und 13 an der Rückseite des Backofens vorgesehen.

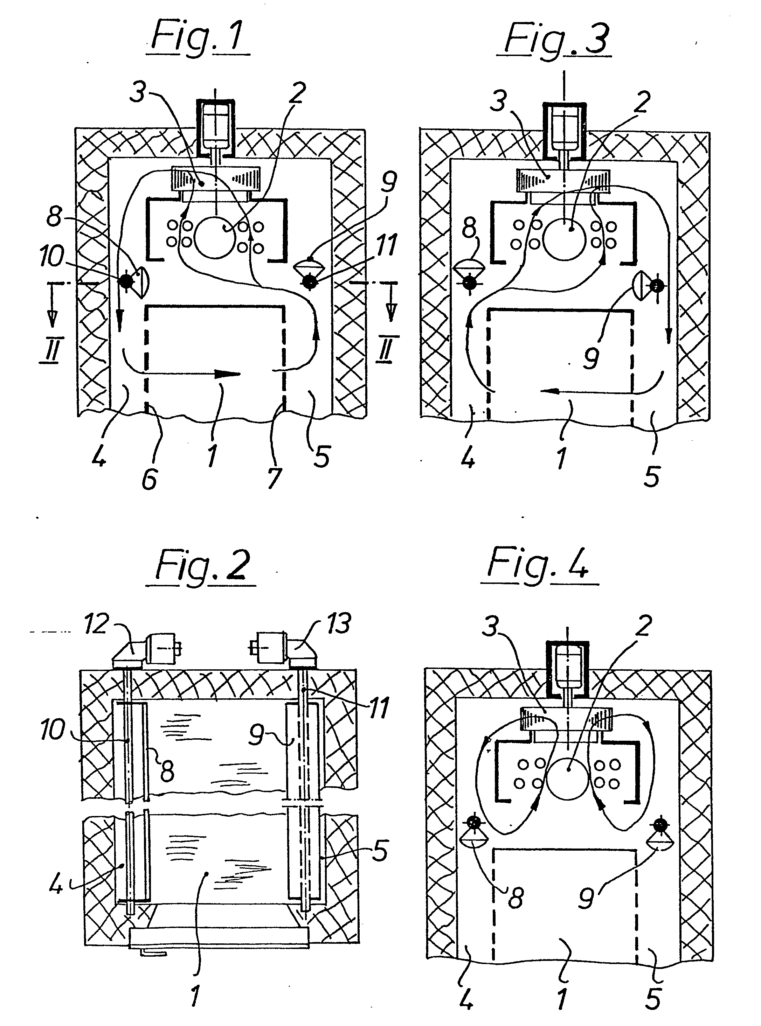

Die Fig. 1 und 3 zeigen die Stellungen der Umsteuerklappen 8, 9 im normalen Backbetrieb. Dabei werden die Umsteuerklappen 8, 9 in gleichbleibenden Zeitabständen von den Stellmotoren 12, 13 in entgegengesetzten Richtungen jeweils um 90 Grad verschwenkt, so daß abwechselnd der Verteilerkanal 4 mit der Druckseite und der Verteilerkanal 5 mit der Saugseite des Umwälzventilators 3 (Fig. 1) und umgekehrt (Fig. 3) verbunden ist. Dementsprechend wird die Heißluft von links nach rechts und umgekehrt durch die Backkammer umgewälzt, wie dies durch die eingezeichneten Strömungspfeile veranschaulicht ist.

Aus Fig. 4 ist die Stellung der Umsteuerklappen 8, 9 während des Beschickens und des unmittelbar danach erfolgenden Beschwadens ersichtlich. Dabei sind beide Klappen so verschwenkt, daß sie die Verteilerkanäle 4, 5 nach oben abschließen. In der Backkammer 1 herrscht also die für das ordnungsgemäße Beschwaden erforderliche »ruhende Atmosphäre«. Während dessen bleiben Heizquelle 2 und Umwälzventilator 3 in Betrieb, wobei die Heißluft im oberen Teil des Backofens zirkuliert. Werden nun durch an sich bekannte und deshalb nicht dargestellte schaltungstechnische Maßnahmen die Umsteuerklappen 8, 9 wieder in die Betriebsstellung gemäß Fig. 1 und 3 gebracht, steht sofort ausreichend aufgeheizte Heißluft für das Backen zur Verfügung.

## Patentansprüche

1. Backofen mit mindestens einer im Grundriß rechteckigen Backkammer (1), einem Schwadenapparat und einer Vorrichtung zum Erzeugen und Umwälzen von Heißluft durch die Backkammer (1), wobei diese Vorrichtung aus einer Heizquelle (2), mindestens einem Umwälzventilator (3), zwei zu den mit Durchtrittsöffnungen für die Heißluft versehenen, einander gegenüberliegenden Seitenwänden (6, 7) der Backkammer (1) führenden Verteilerkanälen (4, 5) sowie an deren offenen Enden angeordneten, zum periodischen Umkehren der Strömungsrichtung der durch die Backkammer (1) umgewälzten Heißluft entgegengesetzt betätigbaren Umsteuerklappen (8, 9), die jeweils in eine den zugehörigen Verteilerkanal (4, 5) verschließende Stellung bewegbar sind, besteht, dadurch gekennzeichnet, daß jede Umsteuerklappe (8, 9) mit einem unabhängigen Antrieb (12, 13) versehen und unabhängig voneinander in eine den zugehörigen Verteilerkanal (4, 5) verschließende Stellung bewegbar ist.

2. Backofen nach Anspruch 1, dadurch gekennzeichnet, daß für jede Umsteuerklappe (8, 9) ein Stellmotor als Antrieb (12, 13) vorgesehen ist.

## Claims

1. Baking oven with at least one baking chamber (1), which is rectangular in plan, a vapour apparatus and a device for the production and circulation of hot air through the baking chamber (1), wherein this device consists of a heat source (2), at least one circulating motor (3), two distributor channels (4, 5) leading to the mutually opposite side walls (6, 7), provided with passage openings for the hot air, of the baking chamber (1) as well as of change-over valve flaps (8, 9), which are arranged at the open ends of the channels, are inversely actuable for the periodic reversal of the direction of flow of the hot air circulated through the baking chamber (1) and which are respectively movable into a position closing off the associated distributor channel (4, 5), characterised thereby, that each change-over valve flap (8, 9) is provided with an independent drive (12, 13) and movable independently of the other into a position closing off the associated distributor channel (4, 5).

2. Baking oven according to claim 1, characterised thereby, that a setting motor is provided as drive (12, 13) for each change-over valve flap (8, 9).

## Revendications

1. Four de boulangerie comportant au moins une chambre (1) de cuisson, rectangulaire en coupe, un dispositif d'évaporation et un dispositif pour produire et faire circuler de l'air chaud dans la chambre (1) de cuisson, ce dernier dispositif consistant en une source (2) de chauffage, en au moins un ventilateur (3) de circulation, en deux canaux répartiteurs (4, 5) conduisant aux parois latérales (6, 7) de la chambre (1) disposées en face l'une de l'autre et percées d'orifices débouchants pour permettre le passage de l'air chaud, ainsi qu'en des volets (8, 9) déflecteurs, montés aux extrémités ouvertes des canaux, actionnables en sens inverse pour inverser périodiquement le sens d'écoulement de l'air chaud mis en circulation dans la chambre (1) de cuisson et qui sont mobiles chaque fois pour être mis en une position fermant l'un des canaux répartiteurs (4, 5) correspondants, four caractérisé en ce que chaque volet (8, 9) déflecteur est équipé d'un entraînement (12, 13) indépendant et chacun peut être déplacé, indépendamment l'un de l'autre, à une position qui ferme le canal répartiteur (4, 5) correspondant.

2. Four de boulangerie selon la revendication 1, caractérisé en ce que, pour chaque volet (8, 9) déflecteur, il est prévu un moteur de commande comme entraînement (12, 13).

0 071 004

# Fig.1

# Fig.3

# Fig.2

# Fig.4